# EUROPEAN PATENT APPLICATION

(11) **EP 4 764 617 A2**
(43) Date of publication of application: **24.06.2026**
(21) Application number: 26161622.1
(22) Date of filing: 26.01.2024
(51) Int. Cl.: G01V 3/165

(54) **TEM TRANSMITTER SYSTEM FOR UAV TOWING**

(30) Priority: 26.01.2023 DK PA202370040
(62) Divisional of application: 24702512.5
(71) Applicant: Selskabet Af 6. April 2010 ApS, 8200 Aarhus N (DK)
(72) Inventor: Mai, Sune Schøtt, 8200 Aarhus N (DK); Mohr, Kristoffer Skovgaard, 8200 Aarhus N (DK); Nyboe, Nicklas Skovgaard, 8200 Aarhus N (DK); Andersen, Lasse Bæk, 8200 Aarhus N (DK)
(74) Representative: Plougmann Vingtoft a/s

(57) **Abstract**

The invention provides a Transient ElectroMagnetic (TEM) transmitter system (TS) for transmitting ElectroMagnetic pulses for sub-terrain surveying while being airborne transported by an associated Unmanned Aerial Vehicle (UAV). The system has a frame (FR) with a peripheral structure (PS) forming a ring extending in a horizontal plane (HP), a central structure (CS) extending along a vertical axis (VA), and a plurality of frame members (FM), such as radial members, interconnecting the peripheral structure (PS) and the central structure (CS). In this way a rigid or substantially rigid peripheral structure (PS) can be provided with light weight components. An EM transmitter coil (TC) is provided with an electrical conductor (EC) arranged along the ring of the peripheral structure (PS), or wherein the electrical conductor (EC) constitutes the peripheral structure (PS) forming the ring. The TEM transmitter system can be carried e.g. by a multi-rotor drone with a carrying capacity of such as 50 kg, and still the TEM transmitter system can be used for high precision sub-terrain surveys.

## Description

### FIELD OF THE INVENTION

The present invention relates to the field of measuring electromagnetic signals, e.g. from the ground or the underground, such as for geophysical surveys. More specifically, the invention relates to a light weight transmitter system for transmitting transient electromagnetic (TEM) pulses when towed by a UAV, e.g. a multi-rotor drone with a limited carrying capacity.

### BACKGROUND OF THE INVENTION

The invention relates to mobile or portable measuring equipment for mapping such as for geophysical surveys, especially equipment to be towed by a vehicle, e.g. a helicopter, for geology mapping or geotechnical investigation. Such equipment comprises at least an electromagnetic (EM) transmitter and receiver system for generating electromagnetic pulses and receiving an EM response from the object to be surveyed. Especially, the measuring equipment may comprise a transmitter coil and an electric generator for generating an electrical pulse for providing a magnetic field build-up and decay (or current build-up and decay) in the formation, and where the EM receiver system measures the EM signal from the formation. Such method called Transient Electro-Magnetic (TEM) sounding, is known e.g. within the fields of mineral prospecting and mapping of ground-water resources.

For high quality airborne TEM surveys a large (plus 100 m²) transmitter coil is typically towed by a helicopter. This involves high costs for surveys.

Small UAVs, such as multi-rotor drones, can operate at low costs compared to helicopter based TEM surveys. However, small drones for carrying less than 25 kg load can not carry a TEM transmitter required for sub-terrain geological surveys. A TEM transmitter with existing frame designs known from helicopter towing but small enough to be carried by a drone can not generate an magnetic moment high enough for obtaining sufficient depth of investigation for sub-terrain geological TEM surveys.

Thus, there is a need for a TEM transmitter suitable for airborne sub-terrain geological surveys, still providing sufficient depth of investigation, by means of drone towing using a standard drone with a limited carriage capacity, such as a maximum capacity of 50-100 kg payload, or even less.

### SUMMARY OF THE INVENTION

In particular, it may be seen as an objective of the present invention to provide an EM transmitter system which can provide TEM measurements for sub-terrain surveys with sufficient depth of invenstigation, but which can still be carried by a drone with limited load capacity, such as a maximum capacity of less than 100 kg, or less than 50 kg.

In a first aspect, the invention provides a Transient ElectroMagnetic (TEM) transmitter system for transmitting ElectroMagnetic (EM) pulses for sub-terrain surveying while being airborne transported by an associated Unmanned Aerial Vehicle, comprising
- a frame, preferably formed by a non-magnetic material, such as a glass fibre or carbon fibre material or a composite material or a sandwich structure comprising glass fibre and carbon fibre, the frame comprising
   - a peripheral structure forming a ring extending in a horizontal plane,
   - a central structure extending along a vertical axis, and
   - a plurality of frame members, such as radial members, each interconnecting respective parts of the peripheral structure and the central structure, so as to provide a rigid or substantially rigid peripheral structure, and
- an EM transmitter coil comprising an electrical conductor forming one or more coil windings arranged for transmitting EM pulses upon application of an electric signal, wherein: 1) the electrical conductor is arranged along the ring of the peripheral structure, or 2) the electrical conductor constitutes the peripheral structure forming the ring.

Such TEM transmitter system is advantageous, since it has been found to be possible to provide a light weight frame which can be carried by a rather small UAV, such as a multi-rotor drone, such as with a carrying capacity of less than 100 kg, e.g. less than 50 kg. Still, in spite of a low weight the proposed frame structure allows a rigid peripheral structure of a substantial size and thus also accommodating a transmitter coil area that can produce a sufficiently high magnetic moment for sub-terrain surveying ensuring a sufficient depth of investigation. Thus, the TEM transmitter system of the first aspect allows sub-terrain TEM surveying with a standard multi-rotor drone. In this way, sub-terrain TEM surveying can be performed at a significantly lower cost than TEM surveying involving a large heavy TEM transmitter which needs to be transported by a helicopter.

With a rigid peripheral structure, the transmitter coil following the peripheral structure will be stable without any low frequency wobbling or the like, which is known to be a problem with large transmitter coils for helicopter TEM surveying. Hereby, high quality TEM measurements can be performed with the TEM transmitter system.

In some embodiments, a TEM receiver coil is also attached to the frame, and thus a complete TEM surveying system including the TEM transmitter, the TEM receiver and a processor system implementing an on-board controller and TEM data recorder. Hereby, a complete TEM surveying system can be carried by one single UAV. In other embodiments, the TEM receiver system can be carried by a separate UAV, thereby allowing a lower weight of the frame with the TEM transmitter system compared to versions including a TEM receiver system.

In the following, preferred features and embodiments will be described.

By 'rigid' is understood that the frame is formed by elements so that the frame provides a rigidity such that all points of connection between the peripheral structure and the frame members maintain their relative positioning during airborne transportation and maneuvering of the frame.

Especially, the frame may preferably be formed by elements such that all points of connection between the peripheral structure and the frame members maintain their relative positioning within a deviation of less than 2 cm, such as 1 cm, such as 0.5 cm, during airborne transportation and maneuvering of the frame.

Especially, it is preferred that the frame is formed by elements so that it provides a limited deformation of the relative positioning of the connection points of the peripheral structure due to dynamic loads compared to a geometry of the peripheral structure under static conditions, such as dynamic loads resulting in deflections of the relative positioning of all points of connection between the peripheral structure and the frame members, which is limited compared to a geometry of the peripheral structure under static conditions, such as said deflections being below 2 cm, such as below 1 cm, such as below 0.5 cm.

Especially, it is preferred that the frame is formed by elements so that the frame can be supported in a single point, such as a single point of the central structure, and to provide a maximum deflection of the peripheral structure to be below 2 % of a smallest diameter of the peripheral structure, such as below 1 % of a smallest diameter of the peripheral structure. More specifically, it is preferred that the frame is formed by elements so that it provides a maximum deflection of an entire part of the peripheral structure to be below 2 % of a smallest diameter of the peripheral structure, such as below 1 % of a smallest diameter of the peripheral structure.

It has especially been found that the central structure preferably has an extent along the vertical axis being at least a factor of 0.2 times, such as at least 0.25 times, such as 0.2-0.8 times, such as 0.3-0.5 times, such as 0.4-0.5 times, a minimum extent of the ring formed by the peripheral structure in the horizontal plane. Hereby a rigid and stable frame can be provided which still allows a rather large transmitter coil to be carried by a UAV with limited carrying capacity.

In preferred embodiments, the peripheral structure and the frame members can be formed by a number of tube shaped elements, wherein the electrical conductor forming the transmitter coil is housed inside the tube elements, such that the transmitter coil follows the ring formed by the peripheral structure. In this way, the frame can be made light weight and rigid at the same time.

The TEM transmitter system preferably comprises an electric generator system arranged for connection to the transmitter coil, wherein the electric generator system is arranged to generate electric pulses with at least one pulse rate at least at 20 Hz, such as at least at 100 Hz, such as within 10-2,000 Hz, such as within 100-2,000 Hz, such as within 100-1,000 Hz. Such ranges of EM pulse rates have been found suitable for use with the TEM transmitter having a size to allow airborne transporting by a UAV with a carrying capacity of for example 50 kg.

Especially, the electric generator may be arranged to generate electric pulses with a plurality of specific shapes and/or pulse rates, such as with a pulse rate of one or more of: 15 Hz, 30 Hz, 60 Hz, 180 Hz, 300 Hz, 540 Hz, 1020 Hz, 1980 Hz. Especially, the electric generator system is preferably housed within a casing which is attached to the frame. The casing preferably also houses a battery for powering the electric generator system.

In preferred embodiments, the EM transmitter coil is capable of providing a magnetic dipole moment of at least 1,000 Am².

In preferred embodiments, the peripheral structure is formed by a plurality of separate elements arranged for being assembled to form the ring. Especially, the peripheral structure is preferably formed by a plurality of separate hollow members, such as 5-20 elongated tube members, arranged for being assembled by connecting elements to form the ring. Specifically, the hollow members are straight tube members, and wherein each straight tube member has a length and a peripheral thickness, and wherein the length is a factor of 30-300 times, such as 30-100 times, such as 50-100 times the peripheral thickness. More specifically, the hollow members may have a length of about 1.8.2.2 m and a peripheral thickness of 25-35 mm, e.g. more specifically a length of 2.0 m and a peripheral thickness of 30 mm. In other embodiments, the length is a factor of more than 100 times, such as 100-2,000 times, such as 200-1,000 times the peripheral thickness.

In a second aspect, the invention provides a TEM surveying system comprising
- the TEM transmitter system according to the first aspect, and
- a UAV, such as a multi-rotor drone, arranged for mechanical connection to the EM transmitter system for airborne transporting of the EM transmitter system at a distance above ground.

In preferred embodiments, the TEM surveying system comprises
- a TEM signal recording system comprising an EM receiver coil, and being arranged to receive an electric signal indicative of an EM signal received by the EM receiver coil, and further being arranged to store a time series of data accordingly, such as on a storage medium. Especially, the TEM signal recording system may be attached to the frame of the TEM transmitter system, thus allowing one single UAV to airborne transport a complete TEM surveying system.

In a third aspect, the invention provides a method for measuring TEM signals, the method comprising
- providing a TEM transmitter system according to the first aspect,
- airborne transporting the TEM transmitter system by means of an associated UAV mechanically connected to the frame of the EM transmitter system,
- transmitting EM pulses by means of the EM transmitter system while being airborne transported, and
- recording EM signals received in response to the transmitted EM pulses.

In a fourth aspect, the invention provides use of the TEM transmitter system according to the first aspect for recording TEM signal data for sub-terrain analysis.

In a fifth aspect, the invention provides TEM signal data which have been measured by means of the TEM transmitter system according to the first aspect.

In a sixth aspect, the invention provides use of the TEM surveying system according to the second aspect for recording TEM signal data for sub-terrain analysis.

In a seventh aspect, the invention provides use of the method according to the third aspect for sub-terrain analysis.

The individual aspects of the present invention may each be combined with any of the other aspects. These and other aspects of the invention will be apparent from the following description with reference to the described embodiments.

### BRIEF DESCRIPTION OF THE FIGURES

The invention will now be described in more detail with regard to the accompanying figures. The figures show one way of implementing the present invention and is not to be construed as being limiting to other possible embodiments falling within the scope of the attached claim set.
FIG. 1 shows a prior art TEM transmitter and receiver coil system towed by a helicopter,
FIG. 2a, 2b, 2c show various views of a TEM transmitter and receiver coil system for UAV towing,
FIG. 2d, 2e show two variants of a TEM transmitter and receiver coil system,
FIG. 2f shows a system variant with a TEM transmitter and two receiver coils,
FIG. 3 shows a complete TEM transmitter and receiver coil system towed by a single UAV,
FIG. 4 shows a TEM transmitter coil system towed by one UAV, and two separate receiver coils towed by respective separate UAVs,
FIG. 5 shows a block diagram of elements of a complete TEM surveying system,
FIG. 6 illustrated steps of a method embodiment, and
FIG. 7a and 7b show sketches of ways to define or test frame rigidity.

### DETAILED DESCRIPTION OF AN EMBODIMENT

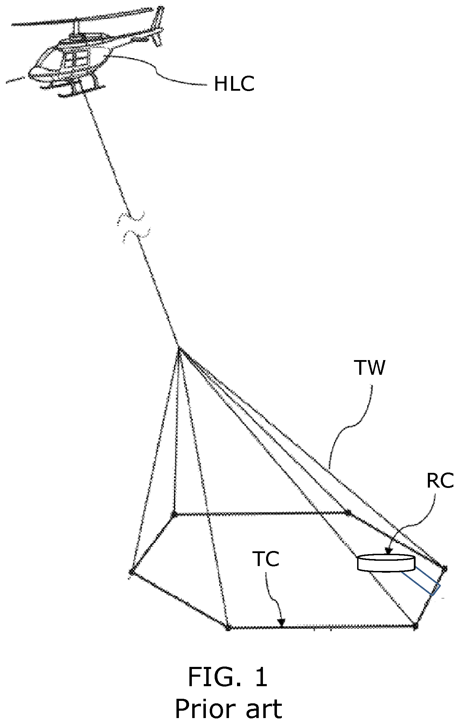

FIG. 1 illustrates a prior art airborne TEM surveying system for sub-terrain TEM surveys, e.g. in search for sub-terrain water reservoirs. A helicopter HLC tows a large structure parallel with the ground. The structure includes a horizontal TEM transmitter coil TC for transmitting EM pulses, and a receiver coil RC for receiving sub-terrain responses to the EM pulses transmitted by the TEM transmitter coil TC. The structure with transmitter and receiver coils TC, RC is connected to the helicopter HLC by a towing connector TW, e.g. an electrically non-conductive wire or tether. The transmitter coil TC covers an area of more than 100 m², and the transmitter frame has a high total weight, such as a weight of several hundreds of kg, such as more than 500 kg, or 500-1,000 kg. Such large and heavy TEM transmitter and receiver system is expensive, is expensive to operate, and the TEM system is complicated and expensive to transport between different survey destinations around the world.

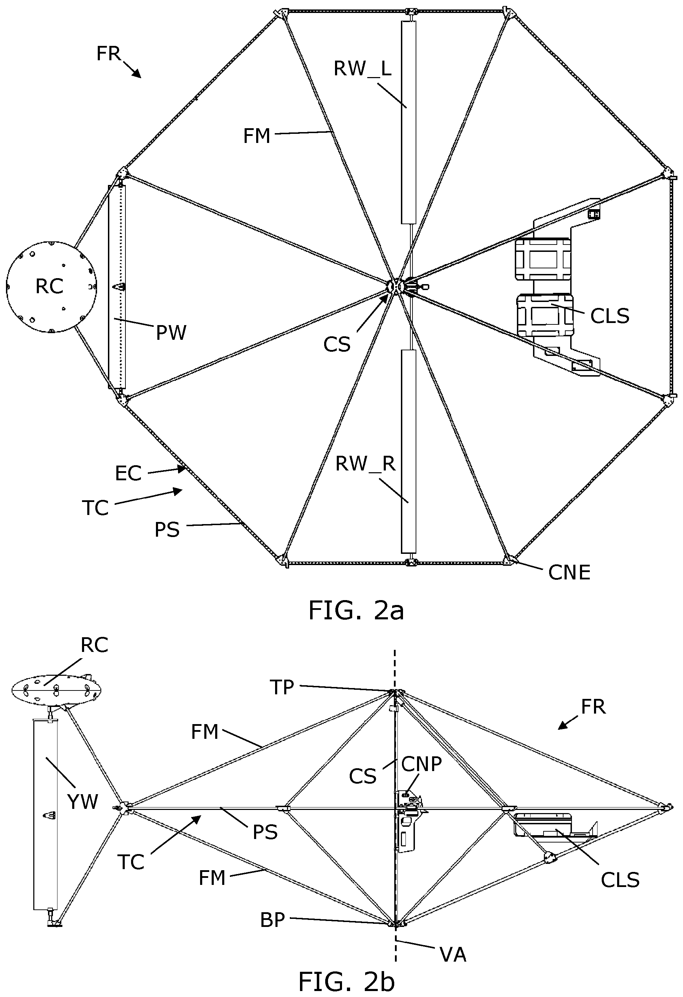

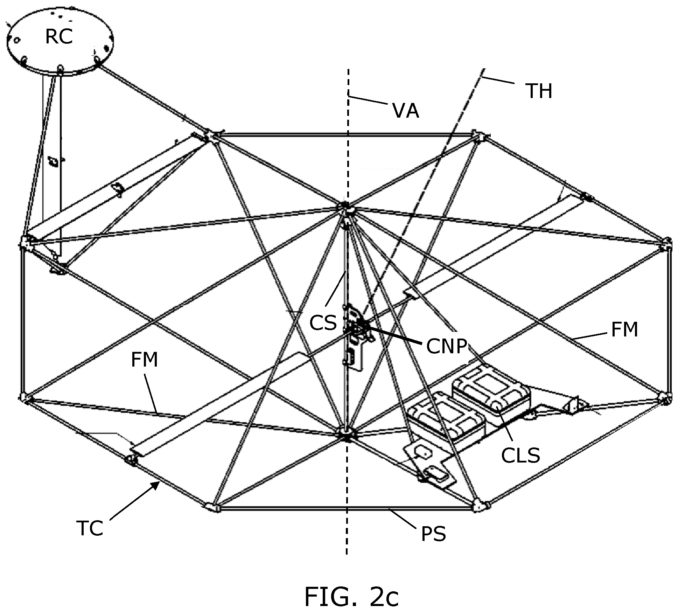

FIG. 2a, 2b, and 2c show various views of a preferred TEM transmitter and receiver system embodiment according to the invention and which is arranged for towing by means of a UAV with limited carrying capacity, such as 50 kg, e.g. a multirotor drone. FIG. 2a shows a top view, FIG. 2b shows a side view, while FIG. 2c shows a 3D view of the system. In preferred embodiments, the TEM transmitter system has an overall dimension of its peripheral structure PS being such that it covers an area of 5-30 m², more preferably 15-20 m², and thus being significantly smaller than the prior art TEM system shown in FIG. 1. Furthermore, the frame FR according to the invention ensures that the peripheral structure PS and thus the transmitter coil TC is rigid or at least has a stiff and stable structure with a high first-order natural frequency. Still, the frame FR can be made light weight and is thus suitable for drone transporting for TEM surveying.

FIG. 2a shows a top view where it can be seen that the peripheral structure PS forms a ring shape in a horizontal plane. The peripheral structure PS houses the electrical conductor forming the transmitter coil TC having one or several loops in the horizontal plane, and thus during TEM surveying, the frame FR should be transported by a UAV in a transporting direction at a distance above ground, so that the horizontal plane maintains a stable position parallel with the ground at all times. As seen, the peripheral structure PS forms an octagonal shaped ring in the horizontal plane and thus, the electrical conductor EC forming the transmitter coil TC also has an octagonal shape.

As seen, the basic frame structure FR, i.e. the peripheral structure PS, and the frame members FM, constitute a horizontally symmetric structure around a central point with a central vertical axis VA along which a central structure CS is positioned and connected to the frame members FM.

The TEM transmitter system has a frame FR with a peripheral structure PS forming a ring extending in the horizontal plane as mentioned. This peripheral structure PS is formed by 8 interconnected straight lightweight tube elements of equal length and being interconnected by connecting elements CNE. In this way the peripheral structure PS forms a ring with an octagonal shape. Preferably, the connecting elements CNE are hollow elements, e.g. polymeric elements, which allow the electrical conductor EC forming the transmitter coil TC to penetrate, so the tube elements and the connecting elements CNE form a ring shaped hollow channel in which the electrical conductor EC forming the one or more loops of the transmitter coil TC is located.

A central structure CS is formed by a straight element extending along a central vertical axis VA as seen in FIG. 2b and 2c. Altogether 16 radial frame members FM interconnect respective parts of the peripheral structure PS and the central structure CS. As seen, the connecting elements CNE each serve to connect two ends of neighbouring straight elements of the peripheral structure PS with ends of two frame members FM, thereby providing a rigid or substantially rigid peripheral structure PS. 8 frame members form a bottom part of the frame FR since they are connected to a bottom part BP of the central structure CS, while 8 frame members form a top part of the frame FR since these are connected to a top part TP of the central structure CS.

It has been found that the central structure CS preferably has an extent along the central vertical axis VA being at least a factor of 0.2 times, such as at least 0.25 times, such as 0.2-0.8 times, such as 0.3-0.5 times, such as 0.4-0.5 times, a minimum extent of the ring formed by the peripheral structure PS in the horizontal plane. This can provide a rigid structure of the frame FR and thus of the peripheral structure PS with lightweight elements, e.g. in the form of thin elongate and rigid elements.

An element serves as a connecting point CNP for a wire or tether TH (see FIG. 2c) serving for connection to the UAV (not shown), which allows the UAV to transport the TEM transmitter by means of one single wire or tether TH. The element serving as connecting point CNP is attached to the central structure, and it may be formed integrally with the central structure. The connecting point CNP is positioned at or near a centre of mass, so as to allow a stable horizontal position of the transmitter coil TC during towing.

The elements forming the peripheral structure, the central structure and the frame members may all be formed by a glass fibre or carbon fibre material or a composite material or a sandwich structure comprising glass fibre and carbon fibre. Especially, the elements may be formed by a multi-layer sandwich structure comprising glass fibre and carbon fibre layers. Especially, the elements may comprise a structure comprising a foam.

The shown TEM transmitter embodiment further has a receiver coil RC attached to the frame FR. The receiver coil RC is arranged for receiving sub-terrain responses to EM pulses transmitted by the transmitter coil TC. The receiver coil RC is positioned inside a casing which is attached to the frame FR, and the receiver coil RC extends in a plane which is parallel with the horizontal plane and which is positioned at a distance above or below the horizontal plane of the peripheral structure PS. Further, the receiver coil RC is positioned at a horizontal position outside the ring formed by the peripheral structure PS of the frame FR. Especially, the receiver coil RC may be mounted on the frame so that its position is manually adjustable, such as to allow zero-point adjustment. By zero-point adjustment means the possibility to fine tune position of the receiver coils, so that it is placed in an area where the induction in the receiving coil from the current in the transmitter coil is zero or minimal. More specifically, the zero-point adjustment is preferably used to ensure that the receiver coil is located in a plane that is tangential to a field line of the transmitted magnetic field. Further, the receiver coil is preferably located in a plane that is parallel to the plane of the transmitter coil. Especially, in some embodiments, a centre of the receiver coil is positioned outside the transmitter coil, however with a partial overlap between the receiver coil and the transmitter coil.

During airborne transportation for TEM surveying, it is important that the transmitter coil TC has a stable position, i.e. the peripheral structure PS of the frame FR should be transported so that the horizontal plane constituted by the peripheral structure PS is maintained parallel with the ground during the TEM surveying. In this way the transmitter coil TC will be maintained in the same position relative to the ground during the TEM surveying along a planned path above the ground, e.g. at a constant height above ground. Thus, preferably any unwanted roll, pitch and yaw during transportation should be minimized.

To provide such stabilizing effect during airborne transportation, the frame FR has a stabilizing system with controllable wings PW, RW_L, RW_R, YW attached to the frame FR for aerodynamically stabilizing the position of the frame FR when being airborne transported in a horizontal direction. These wings PW, RW_L, RW_R, YW each has at least one controllable actuator for tilting the wing structure relative to the frame FR, to allow aerodynamic control of the frame FR. Two separately controllable wings RW_L, RW_R serve to control roll of the frame FR, one controllable wing PW serves to control pitch of the frame FR, and one controllable wing YW serves to control yaw of the frame FR.

The TEM transmitter system has an on-board control system CLS connected to control the controllable actuators of the wings PW, RW_L, RW_R, YW in response to an input from a plurality of sensors arranged to sense actual position of the frame FR, so as to allow control of tilt position of the wings for stabilizing the position of the frame FR when being transported by the UAV. Especially, the mentioned sensors comprises sensors to measure roll and pitch of the frame FR for controlling the roll wings RW_L, RW_R and the pitch wing PW.

The casing containing the control system CLS for the wings PW, RW_L, RW_R, YW may in addition contain the necessary electrical components required to provide electric signals to the transmitter coil TC for generating the EM pulses. Thus, the box preferably contains a pulse generator configured for applying electric pulses to the EM transmitter coil TC. Especially, the pulse generator may be configured to generate electric pulses with at least one pulse rate at least at 20 Hz, such as at least 100 Hz, such as within 100-2,000 Hz, such as within 100-1,000 Hz, or such as within 20-200 Hz. Specifically, it has been found that a pulse rate of 500-2,000 Hz provides good TEM surveying results with a transmitter coil TC size of 5-30 m². The pulse generator may be controlled by a controller having a processor programmed to operate the EM transmitter system according to a control algorithm.

The casing preferably houses an electric power source, e.g. a rechargeable battery, for electrically powering the control system CLS and the pulse generator during airborne transportation. The electric power source may further provide electric power for powering electric components connected to the receiver coil RC, e.g. a complete TEM signal recording system.

The casing housing the controller CLS and further components as described is seen as attached to two frame members at a front part of the frame FR, while the receiver coil RC is attached to the rear part of the frame FR, i.e. seen in the intended direction of transportation. Further, the yaw wing YW and the pitch wing PW are also attached to a rear part of the frame FR, while the roll wings RW_L, RW_R are attached to a central part of the frame FR at or near the horizontal plane constituted by the peripheral structure PS.

The control system CLS may further comprise one or more of: an inclinometer, an altimeter, and a GPS unit. E.g. the control system CLS may comprise an Inertial Measurement Unit (IMU).

It may be preferred to place the casing housing the controller CLS away from the frame FR, e.g. placed on the tether TH between the frame and the drone towing the frame FR.

In some embodiments without a receiver coil RC, the yaw wing YW can be eliminated, since it is seen attached to the peripheral structure PS of the frame FR via a separate structure also carrying the receiver coil RC.

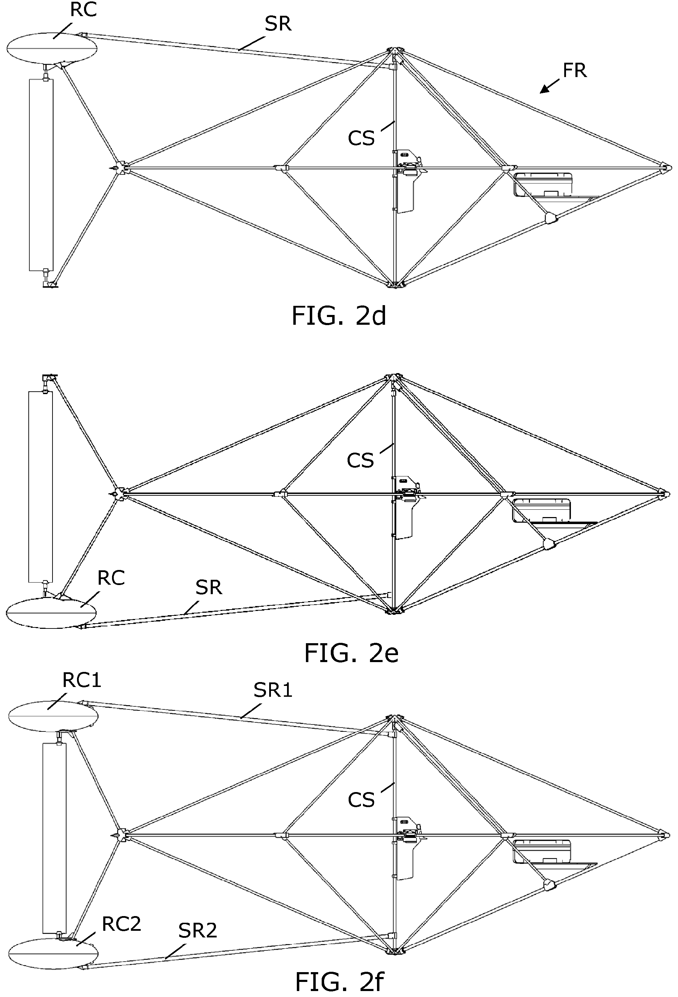

FIG. 2d and 2e show side views of variants of the TEM transmitter system TS shown in FIG. 2a-2c, and basically these variants have the same frame FR structure and a receiver coil RC. However, in the variants of FIG. 2d and 2e, a support rod SR serves to provide further mechanical support of the receiver coil RC, where the support rod SR is attached to interconnect the receiver coil RC with the central structure CS. In FIG. 2d the receiver coil RC is placed above the horizontal plane formed by the peripheral structure of the frame FR, while in FIG. 2d the receiver coil RC is placed below the horizontal plane formed by the peripheral structure of the frame FR.

FIG. 2f shows a side view of yet another variant of the TEM transmitter system, which is basically similar to the systems shown in FIG. 2a-2d, but the variant in FIG. 2f comprises two receiver coils RC1, RC2. One receiver coil RC1 is placed above the horizontal plane formed by the peripheral structure of the frame FR, while the other receiver coil RC2 is placed below the horizontal plane formed by the peripheral structure.

As in FIG. 2d and 2e, the receiver coils RC1, RC2 are further mechanically supported, namely here shown as the respective support rods SR1, SR2 which interconnect the respective receiver coils RC1, RC2 with the central structure CS of the frame FR.

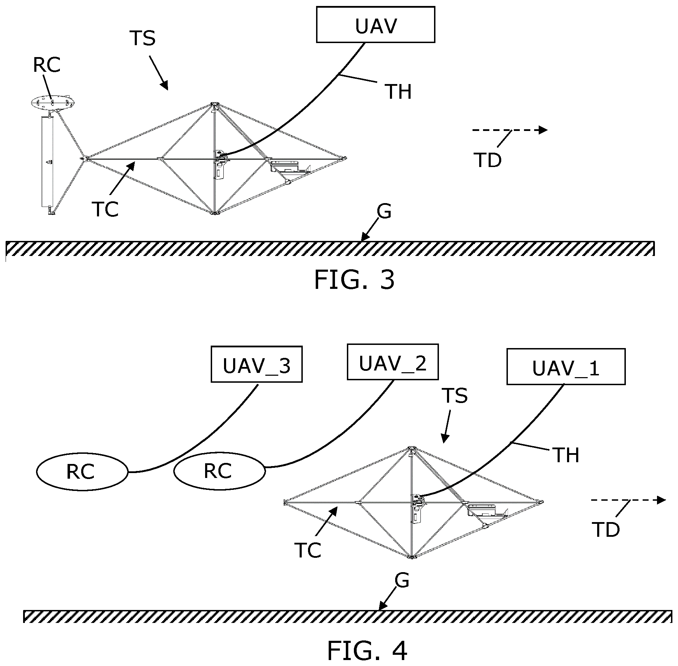

FIG. 3 shows an embodiment of the TEM transmitter system TS which has a receiver coil RC for recording TEM signals in response to the EM pulses generated by the transmitter coil TC, and thus the TEM transmitter system TS forms a complete TEM surveying system. The shown embodiment TS corresponds to the embodiment shown in FIG. 2a, 2b, and 2c. In FIG. 3 this complete TEM surveying system is illustrated airborne transported in a transport direction TD at a distance above ground G by one single drone UAV by means of mechanical connection to the frame with one single wire or tether TH. The drone UAV can be controlled to follow a planned path for mapping an area of the ground G, e.g. the drone may be programmed to follow the planned path.

FIG. 4 shows an alternative embodiment of the TEM transmitter system TS with a transmitter coil TC but without a receiver coil mounted on the frame. Still, the TEM transmitter system TS preferably comprises the necessary equipment for generating an electric signal to the TEM transmitter coil TC to transmit EM pulses and e.g. also navigation equipment for navigating the frame such as sensors and actuators for stabilizing wings or fins etc. The frame is transported in a transport direction TD at a distance above ground G by one single drone UAV_1 connected to the frame by a wire or tether TH. At least one separate drone UAV_2 transports a TEM receiver coil RC for recording TEM signals in response to EM signals transmitted by the transmitter coil TC in the TEM transmitter system TS. In the example of FIG. 4, a second separate drone UAV_3 transports a second receiver coil RC. The receiver drones UAV_2, UAV_3 may be controlled to follow the transmitter system TS so as to maintain different horizontal positions relative to the transmitter system TS during surveying. Alternatively, or additionally, the receiver drones UAV_2, UAV_3 may be controlled to follow the transmitter system TS so as to maintain different vertical positions relative to the transmitter system TS.

The receiver coil RC can be implemented as a "bird" which is transported by a wire or tether connection to the drone UAV_2, UAV_3.

The transmitter drone UAV_1 and the receiver drones UAV_2, UAV_3 can be controlled separately or controlled in a synchronous manner, so as to follow a planned path for mapping an area of the ground G. E.g. the drones UAV_1, UAV_2, UAV_3 may be programmed to follow the planned path.

Instead of having more copies of one TEM receiver system, the separate TEM receiver systems may have different receiver coil systems optimized for different bandwidth or sensitivity, e.g. one receiver coil system optimized to measure early time responses while another receiver coil system is optimized to measure late time responses. E.g. to allow simultaneous receipt of TEM responses at different positions relative to the TEM transmitter system TS, e.g. with TEM receiver coils towed at different altitude and/or horizontal position relative to the TEM transmitter system TS. Further, the separate TEM receiver system may have coils with different orientations, thus covering e.g. two or three perpendicular orientations of receiver coils.

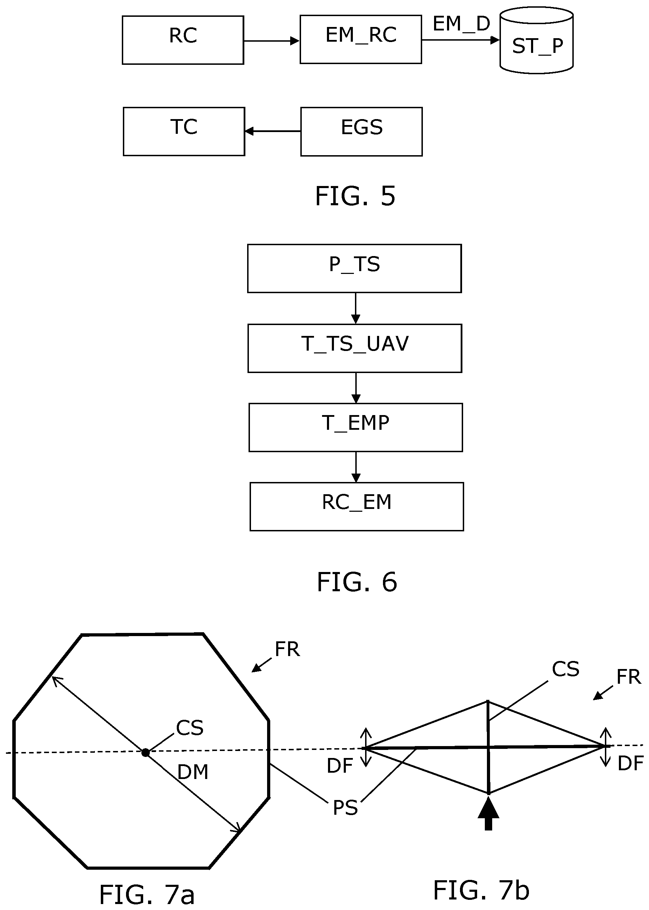

FIG. 5 illustrates a block diagram of elements of a TEM measurement system for TEM surveying. A transmitter coil TC arranged on a frame according to the invention serves to provide EM pulses by means of an electric current which is generated by an electric generator system EGS, e.g. arranged to generate electric pulses with a fixed repetition rate of such as 10-1,000 Hz, e.g. a selectable fixed repetition rate within 10-1,000 Hz.

An EM receiver system has an EM receiver coil RC arranged to receive EM signal responses from the surveyed object in response to the applied EM signal pulses provided by the transmitter coil TC. The receiver coil RC of the EM receiver system is electrically connected via a pre-amplifier, e.g. a differential amplifier, to an EM recording system EM_RC including an analog-to-digital converter and e.g. other analog or digital signal pre-processing means. The resulting EM signal data EM_D are then stored on a storage platform ST_P in a predefined data format for later analysis. The storage platform ST_P may be in the form of a physical storage medium, e.g. a hard disk or the like, a computer memory, or a cloud based storage.

FIG. 6 illustrates steps of a method embodiment, i.e. a method for measuring TEM signals. First, providing P_TS a TEM transmitter system according to the first aspect of the invention. Especially, this may comprise assembling the frame based on a kit of components, including assembling a plurality of separate elements to form the peripheral structure, and assembling a plurality of separate elements to form the frame members and central structure. Next, airborne transporting T_TS_UAV the TEM transmitter system by means of an associated UAV mechanically connected to the frame of the EM transmitter system, preferably by means of a wire or tether serving to mechanically connect the frame to the UAV, e.g. a multirotor drone with a lifting capacity of such as 50 kg. While being airborne transported, transmitting T_EMP EM pulses by means of the TEM transmitter system, and further recording RC_EM TEM signals received in response to the transmitted pulses. In some embodiments the TEM receiver coil and further TEM recording components may be arranged on the same frame as the TEM transmitter system, and thus transported by the same UAV as the TEM transmitter. In other embodiments, the TEM receiver coil and further TEM recording components may be transported by a separate UAV or multiple receiver TEM receiver coils and TEM recording components may be transported by respective separate UAVs.

The method may comprise a subsequent step of analysing the recorded TEM signals to arrive at a sub-terrain mapping in response to the recorded TEM signals.

FIG. 7a and 7b show sketches of examples of testing or defining rigidity of the frame FR in top view (FIG. 7a) and in a side view (FIG. 7b) for a frame embodiment. Preferred embodiments of the frame FR are formed by elements with properties so that the frame FR can be mounted or supported in a single support point (bold arrow) on the central structure CS, such as shown on a bottom part of the central structure CS, or a single point near or at the Center of Mass, e.g. at a point where a tether for towing will normally be attached. In these cases, the frame FR is preferably formed by elements so that it provides a maximum deflection DF of the peripheral structure, e.g. in a vertical direction, to be no more than 2% or no more than 1 % of the smallest diameter DM of the peripheral structure, compared to when the frame FR is evenly supported or not supported. With such small deflection DF, it has been found that the frame FR can be considered as rigid with respect to airborne transportation and maneuvering so that wobbling of the peripheral structure PS and thus the transmitter coil can be neglected.

In case of a smallest diameter of 4.5 m, a maximum deflection of at the peripheral structure PS of such as 9 cm (2 %), or more preferably a maximum deflection of the peripheral structure PS of such as 4,5 cm (1 %) is considered as a suitable measure of rigidity of the frame FR for performing high quality TEM measurements by UAV towing.

To sum up, the invention provides a Transient ElectroMagnetic (TEM) transmitter system (TS) for transmitting ElectroMagnetic pulses for sub-terrain surveying while being airborne transported by an associated Unmanned Aerial Vehicle (UAV). The system has a frame (FR) with a peripheral structure (PS) forming a ring extending in a horizontal plane (HP), a central structure (CS) extending along a vertical axis (VA), and a plurality of frame members (FM), such as radial members, interconnecting the peripheral structure (PS) and the central structure (CS). In this way a rigid or substantially rigid peripheral structure (PS) can be provided with light weight components. An EM transmitter coil (TC) is provided with an electrical conductor (EC) arranged along the ring of the peripheral structure (PS), or wherein the electrical conductor (EC) constitutes the peripheral structure (PS) forming the ring. The TEM transmitter system can be carried e.g. by a multi-rotor drone with a carrying capacity of such as 50 kg, and still the TEM transmitter system can be used for high precision sub-terrain surveys.

In the following items I1-I64 will be defined.

I1. A Transient ElectroMagnetic transmitter system (TS) for transmitting ElectroMagnetic pulses for sub-terrain surveying while being airborne transported by an associated Unmanned Aerial Vehicle (UAV), comprising
- a frame (FR), preferably formed by a non-magnetic material, such as a glass fibre or carbon fibre material or a composite material or a sandwich structure comprising glass fibre and carbon fibre, the frame comprising
   - a peripheral structure (PS) forming a ring extending in a horizontal plane (HP),
   - a central structure (CS) extending along a vertical axis (CA), and
   - a plurality of frame members (FM), such as radial members, each interconnecting respective parts of the peripheral structure (PS) and the central structure (CS), so as to provide a rigid or substantially rigid peripheral structure (PS), and
- an EM transmitter coil (TC) comprising an electrical conductor forming one or more coil windings arranged for transmitting EM pulses upon application of an electric signal, wherein:
   1) the electrical conductor (EC) is arranged along the ring of the peripheral structure (PS), or
   2) the electrical conductor (EC) constitutes the peripheral structure (PS) forming the ring.

I2. The system according to I1, wherein the central structure has an extent along the vertical axis being at least a factor of 0.2 times, such as at least 0.25 times, such as 0.2-0.8 times, such as 0.3-0.5 times, such as 0.4-0.5 times, a minimum extent of the ring formed by the peripheral structure in the horizontal plane.

13. The system according to I1 or I2, wherein the plurality of frame members interconnect respective parts of the peripheral structure and a part of the central structure at a vertical distance away from the horizontal plane formed by the peripheral structure.

I4. The system according to I3, comprising a first plurality of frame members, such as 6-10 members, interconnecting respective parts of the peripheral structure and a part of the central structure at a height above the horizontal plane formed by the peripheral structure, and wherein the system comprises a second plurality of frame members, such as 6-10 members, interconnecting respective parts of the peripheral structure and a part of the central structure at a height below the horizontal plane formed by the peripheral structure.

I5. The system according to I4, wherein said first plurality of frame members are connected to a top part of the central structure, and wherein said second plurality of frame members are connected to a bottom part of the central structure.

I6. The system according to any of I1-I5, wherein the electrical conductor of the EM transmitter coil is arranged inside a ring shaped hollow part of the peripheral structure.

I7. The system according to any of I1-I6, wherein the ring formed by the peripheral structure has a polygonal shape, such as an octagonal shape, such as forming a regular octagonal shape, such as a polygonal shape with 9 or 10 sides or even more sides.

I8. The system according to any of I1-I7, wherein the peripheral structure is formed by a plurality of separate elements arranged for being assembled to form the ring.

I9. The system according to I8, wherein the peripheral structure is formed by a plurality of separate hollow members, such as 5-20 elongated tube members of equal lengths, arranged for being assembled by connecting elements to form the ring.

I10. The system according to I9, wherein the plurality of hollow members are straight tube members of equal lengths, and wherein each straight tube member has a length and a peripheral thickness, and wherein the length is a factor of 30-300 times, such as 30-100 times, such as 50-100 times the peripheral thickness.

I11. The system according to I9 or I10, wherein the electrical conductor forming the EM transmitter coil is arranged inside said hollow members.

I12. The system according to any of I1-I11, wherein the plurality of frame members are elongated straight members, such as 8-30 elongated straight tube shaped members, each of these elongated straight members being arranged for being attached via connecting elements to a top and a bottom part of the central structure and to the peripheral structure.

I13. The system according to I12, wherein a first part of the plurality of the elongated straight members, such as 4-15, are connected to the top part of the central structure, and wherein a second part of the plurality of elongated straight members are connected to the bottom part of the central structure.

I14. The system according to I12 or I13, wherein each of the plurality of elongated straight frame members extends radially between its connection point to the central structure and its connection point to the peripheral structure.

I15. The system according to any of I12-I14, comprising a top connecting element for connecting the central structure at one end to a first part of the plurality of the elongated straight members, and comprising a bottom connecting element for connecting the central structure at an opposite end to a second part of the plurality of elongated straight members.

I16. The system according to any of I1-I15, wherein the central structure is formed by a straight member.

I17. The system according to any of I1-I16, wherein the peripheral structure, the central structure and the frame members are all formed by elongated straight elements interconnected by connecting elements (CNE).

I18. The system according to I17, comprising a plurality of connecting elements, such as polymeric elements, arranged for interconnecting ends of two frame members and ends of two peripheral structure members.

I19. The system according to any of I17 or I18, comprising first and second connecting elements each being arranged for interconnecting an end of the central structure and ends of at least three frame members.

I20. The system according to any of I17-I19, wherein each of the elongated straight elements has a length and a peripheral thickness, and wherein the length is at least a factor of 30 times, such as at least a factor of 50 times, such as at least a factor of 100 times, such as at least a factor of 200 times, such as a factor of 30-300 times, such as a factor of 30-100 times the peripheral thickness.

I21. The system according to any of I17-I20, wherein the peripheral structure is formed by 6-12, such as 8, elongated straight elements, wherein the central structure is formed by at least one elongated straight element, and wherein 12-24 elongated straight elements constitute the frame members.

I22. The system according to any of I1-I21, wherein the peripheral structure, the central structure and the frame members are all formed by elongated straight elements, such as hollow tube elements, formed by a non-magnetic material, such as sandwich structure comprising at least two materials, such as sandwich structure comprising a carbon fibre material, such as comprising a sandwich structure glass fibre material.

I23. The system according to any of I1-I22, wherein the frame is configured for being assembled and disassembled, such as at least the peripheral structure being arranged for being assembled and disassembled.

I24. The system according to I23, wherein the frame is configured for being assembled and disassembled manually without the use of a tool.

I25. The system according to I24, wherein at least a part of the peripheral structure, the central structure and the frame members are formed elongated members, wherein connecting elements serve to interconnect ends of the elongated members by means of press fit, so as to allow a user to manually assemble and disassemble the frame.

I26. The system according to any of I1-I25, arranged for being transported by the associated UAV by mechanical connection at one single mechanical connection point (CNP), such as by a tether (TH) connected to the one single mechanical connection point.

I27. The system according to I26, wherein the mechanical connection point is located at or near a centre of mass of the EM transmitter system, such as in or near said horizontal plane formed by the peripheral structure.

I28. The system according to I26 or I27, wherein the mechanical connection point is a part of the central structure, or wherein the mechanical connection point is provided by an element being attached to the central structure, said element being configured for attachment of a tether (TH), wire or string or the like for mechanical connection to the associated UAV.

I29. The system according to any of I1-I28, wherein the ring formed by the peripheral structure covers an area of 2-100 m², such as 5-50 m², such as 10-30 m².

I30. The system according to any of I1-I28, wherein the ring formed by the peripheral structure covers an area of less than 100 m², such as less than 50 m², such as less than 30 m², such as less than 10 m², such as less than 5 m².

I31. The system according to any of I1-I30, wherein the EM transmitter coil is capable of providing a magnetic dipole moment of at least 1,000 Am².

I32. The system according to any of I1-I31, wherein the frame (FR) is formed by elements so that all points of connection between the peripheral structure (PS) and the frame members (FM) maintain their relative positioning during airborne transportation and manoeuvring of the frame (FR).

I33. The system according to any of I1-I32, wherein the frame (FR) is formed by elements so that the frame (FR) provides a limited deformation of the peripheral structure (PS) due to dynamic loads compared to a geometry of the peripheral structure (PS) under static conditions.

I34. The system according to I33, wherein the frame (FR) is formed by elements so that the frame (FR) provides deflections of the relative positioning of all points of connection between the peripheral structure (PS) and the frame members (FM) due to dynamic loads, wherein said deflections are below 2 cm, such as below 1 cm, such as below 0.5 mm.

I35. The system according to any of I1-I34, wherein the frame (FR) is formed by elements so that the frame (FR) provides a rigidity allowing the frame (FR) to be supported in a single point, such as a single point of the central structure (CS), and to provide a maximum deflection of an entire part of the peripheral structure (PS) to be below 2 % of a smallest diameter of the peripheral structure (PS), such as below 1 % of a smallest diameter of the peripheral structure (PS).

I36. The system according to any of I1-I35, comprising a pulse generator configured for applying electric pulses to the EM transmitter coil, such as being configured to generate electric pulses with at least one pulse rate at least at 20 Hz, such as at least 100 Hz, such as within 100-2,000 Hz, such as within 100-1,000 Hz, or such as within 20-200 Hz.

I37. The system according to I36, wherein the pulse generator is positioned inside a casing, such as being attached to at least one of the frame members, such as being attached to at least two frame members, such as being attached to a tether (TH) for mechanical connection between the frame and the associated UAV.

I38. The system according to any of I1-I37, comprising a controller comprising a processor configured to operate the EM transmitter system according to a control algorithm.

I39. The system according to I38, wherein the controller further comprises at least one of: an inclinometer, an altimeter, and a GPS unit, such as comprising all of: an inclinometer, an altimeter, and a GPS unit.

I40. The system according to I38 or I39, wherein the controller is positioned inside a casing which is attached to at least one of the frame members, such as attached to at least two frame members.

I41. The system according to any of I1-I40, comprising a receiver coil (RC) for receiving sub-terrain responses to EM pulses transmitted by the EM transmitter coil.

I42. The system according to I41, wherein the receiver coil (RC) is attached to the frame, such as the receiver coil (RC) being positioned inside a casing which is attached to the frame.

I43. The system according to I41 or I42, wherein the receiver coil extends in a plane which is parallel with the horizontal plane formed by the peripheral structure and which is positioned at a distance above or below the horizontal plane formed by the peripheral structure, and wherein the receiver coil is positioned at a horizontal position outside the ring formed by the peripheral structure of the frame.

I44. The system according to I43, wherein the receiver coil is mounted on the frame so that its position is manually adjustable, such as to allow zero-point adjustment.

I45. The system according to any of I41-I44, comprising first and second receiver coils (RC1, RC2) attached to the frame, wherein the first and second receiver coils (RC1, RC2) are arranged to receive sub-terrain responses to EM pulses transmitted by the EM transmitter coil.

I46. The system according to I45, wherein the first receiver coil (RC1) extends in a plane which is parallel with the horizontal plane formed by the peripheral structure and which is positioned at a distance above said horizontal plane, and wherein the second receiver coil (RC2) is parallel with the horizontal plane formed by the peripheral structure and which is positioned at a distance below said horizontal plane.

I47. The system according to any of I1-I46, comprising a stabilizing system arranged to stabilize the position of the frame when being airborne transported by the associated UAV such as stabilizing one or more of: roll, pitch and yaw of the frame when being airborne transported, such as to minimize any unwanted roll, pitch and yaw of the frame when being airborne transported in a horizontal direction.

I48. The system according to I47, wherein the stabilizing system comprises at least one controllable aerodynamic structure attached to the frame for aerodynamically stabilizing position of the frame when being airborne transported by the associated UAV, such as stabilizing one or more of: roll, pitch and yaw of the frame when being airborne transported, such as to minimize any unwanted roll, pitch and yaw of the frame when being airborne transported in a horizontal direction.

I49. The system according to I48, comprising a controllable actuator for controlling position of the aerodynamic structure, such as for controlling a tilt or a rotational position of the aerodynamic structure.

I50. The system according to I49, comprising a control system connected to control the controllable actuator in response to at least one input, such as an input from a sensor, so as to control position of the aerodynamic structure for stabilizing position of the frame when being transported by the associated UAV.

I51. The system according to I50, wherein the control system is arranged to control at least one of: roll, pitch, and yaw of the frame by controlling the controllable actuator in response to the at least one input.

I52. The system according to any of I48-I51, comprising a plurality of controllable aerodynamic structures attached to the frame, so as to control at least two of: roll, pitch and yaw of the frame when being transported by the associated UAV.

I53. The system according to I 52, comprising
- a first controllable actuator for controlling position of a first aerodynamic structure for controlling roll of the frame,
- a second controllable actuator for controlling position of a second aerodynamic structure for controlling pitch of the frame, and
- a third controllable actuator for controlling position of a third aerodynamic structure for controlling yaw of the frame.

I54. The system according to I53, comprising a control system arranged to control the first, second and third actuators for stabilizing the frame when being airborne transported by the associated UAV.

I55. The system according to I54, wherein the control system is arranged to control the first, second and third actuators in response to a plurality of inputs from respective sensors.

I56. The system according to any of I47-I55, comprising two separately controllable aerodynamic structures for controlling roll of the frame when being transported by the associated UAV.

I57. A TEM surveying system comprising
- the TEM transmitter system (TS) according to any of I1-I56, and
- an Unmanned Aerial Vehicle (UAV, UAV_1), such as a multi-rotor drone, arranged for mechanical connection to the EM transmitter system (TS) for airborne transporting of the EM transmitter system at a distance above ground.

I58. The TEM surveying system according to I57, further comprising
- a TEM signal recording system (EM_RC) comprising an EM receiver coil (RC), and being arranged to receive an electric signal indicative of an EM signal received by the EM receiver coil (RC), and further being arranged to store a time series of data (EM_D) accordingly, such as on a storage medium (ST_P).

I59. The TEM surveying system according to I58, wherein the TEM signal recording system (RC, EM_RC) is attached to the frame (FR).

I60. A method for measuring TEM signals, the method comprising
- providing (P_TS) a TEM transmitter system according to any of claims 1-56,
- airborne transporting (T_TS_UAV) the TEM transmitter system by means of an associated UAV mechanically connected to the frame of the EM transmitter system,
- transmitting (T_EMP) EM pulses by means of the TEM transmitter system while being airborne transported, and
- recording (RC_EM) TEM signals received in response to the transmitted TEM pulses.

I61. Use of the TEM transmitter system according to any of I1-I56 for recording TEM signal data for sub-terrain analysis.

I62. TEM signal data which have been measured by means of the TEM transmitter system according to any of I1-I56.

I63. Use of the TEM surveying system according to any of I57-I59 for recording TEM signal data for sub-terrain analysis.

I64. Use of the method according to I60 for sub-terrain analysis.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features may be possible and advantageous.

## Claims

1. A Transient ElectroMagnetic transmitter system (TS) for transmitting ElectroMagnetic pulses for sub-terrain surveying while being airborne transported by an associated manned or Unmanned Aerial Vehicle (UAV), comprising
- a frame (FR), preferably formed by a non-magnetic material, such as a glass fibre or carbon fibre material or a composite material or a sandwich structure comprising glass fibre and carbon fibre, the frame comprising
- a peripheral structure (PS) forming a ring extending in a horizontal plane (HP),
- a central structure (CS) extending along a vertical axis (CA), and
- a plurality of frame members (FM), such as radial members, each interconnecting respective parts of the peripheral structure (PS) and the central structure (CS), so as to provide a rigid or substantially rigid peripheral structure (PS),
- an EM transmitter coil (TC) comprising an electrical conductor forming one or more coil windings arranged for transmitting EM pulses upon application of an electric signal, wherein:
1) the electrical conductor (EC) is arranged along the ring of the peripheral structure (PS), or
2) the electrical conductor (EC) constitutes the peripheral structure (PS) forming the ring, and
- a receiver coil (RC) for receiving sub-terrain responses to EM pulses transmitted by the EM transmitter coil (TC), wherein the receiver coil (RC) is attached to the frame (FR) and placed in an area where induction in the receiving coil (RC) from current in the transmitter coil (TC) is zero or minimal.

2. The system according to claim 1, wherein the plurality of frame members interconnect respective parts of the peripheral structure and a part of the central structure at a vertical distance away from the horizontal plane formed by the peripheral structure.

3. The system according to any of the preceding claims, wherein the electrical conductor of the EM transmitter coil is arranged inside a ring shaped hollow part of the peripheral structure.

4. The system according to any of the preceding claims, wherein the peripheral structure is formed by a plurality of separate elements arranged for being assembled to form the ring.

5. The system according to any of the preceding claims, wherein the plurality of frame members are elongated straight members, such as 8-30 elongated straight tube shaped members, each of these elongated straight members being arranged for being attached via connecting elements to a top and a bottom part of the central structure and to the peripheral structure.

6. The system according to any of the preceding claims, wherein the peripheral structure, the central structure and the frame members are all formed by elongated straight elements interconnected by connecting elements (CNE), further comprising a plurality of connecting elements, such as polymeric elements, arranged for interconnecting ends of two frame members and ends of two peripheral structure members.

7. The system according to any of the preceding claims, wherein the frame is configured for being assembled and disassembled, such as at least the peripheral structure being arranged for being assembled and disassembled.

8. The system according to any of the preceding claims, wherein the ring formed by the peripheral structure covers an area of less than 50 m², such as less than 30 m², such as less than 10 m², such as less than 5 m².

9. The system according to any of the preceding claims, comprising a controller comprising a processor configured to operate the EM transmitter system according to a control algorithm.

10. The system according to any of the preceding claims, comprising first and second receiver coils (RC1, RC2) attached to the frame, wherein the first and second receiver coils (RC1, RC2) are arranged to receive sub-terrain responses to EM pulses transmitted by the EM transmitter coil.

11. The system according to any of the preceding claims, wherein said zero-point adjustment is used to ensure that the receiver coil (RC) is located in a plane that is tangential to a field line of a transmitted magnetic field.

12. The system according to any of the preceding claims, wherein receiver coil (RC) is mounted on the frame so that its position is adjustable, such as to allow zero-point adjustment.

13. The system according to any of the preceding claims, wherein the receiver coil (RC) extends in a plane which is parallel with the horizontal plane formed by the peripheral structure (PS) and positioned at a distance above or below the horizontal plane formed by the peripheral structure (PS).

14. The system according to any of the preceding claims, wherein a centre of the receiver coil (RC) is positioned outside the EM transmitter coil.

15. A TEM surveying system comprising
- the TEM transmitter system (TS) according to any of claims 1-14, and
- a manned or Unmanned Aerial Vehicle (UAV, UAV_1), arranged for mechanical connection to the EM transmitter system (TS) for airborne transporting of the EM transmitter system at a distance above ground, further comprising
- a TEM signal recording system (EM_RC) comprising an EM receiver coil (RC), and being arranged to receive an electric signal indicative of an EM signal received by the EM receiver coil (RC), and further being arranged to store a time series of data (EM_D) accordingly, such as on a storage medium (ST_P).
